(19) Europäisches Patentamt / European Patent Office / Office européen des brevets

(11) **EP 3 638 972 B1**

(12) **FASCICULE DE BREVET EUROPEEN**

(45) Date de publication et mention de la délivrance du brevet:
**07.06.2023   Bulletin 2023/23**

(21) Numéro de dépôt: **18729462.4**

(22) Date de dépôt: **13.06.2018**

(51) Classification Internationale des Brevets (IPC):
*F41G 1/30* *(2006.01)*       *F41G 3/16* *(2006.01)*
*G02B 23/14* *(2006.01)*       *G02B 27/01* *(2006.01)*
*F41G 1/32* *(2006.01)*

(52) Classification Coopérative des Brevets (CPC):
**F41G 3/165; F41G 1/30; G02B 23/14;**
**G02B 27/0189;** F41G 1/32

(86) Numéro de dépôt international:
**PCT/EP2018/065701**

(87) Numéro de publication internationale:
**WO 2018/229149 (20.12.2018 Gazette 2018/51)**

(54) **VISEUR DESTINÉ À ÊTRE UTILISÉ DE JOUR ET DE NUIT ET ARME À FEU**

VISIER ZUR VERWENDUNG AM TAG UND IN DER NACHT UND FEUERWAFFE

SIGHT FOR USE BY DAY AND AT NIGHT AND FIREARM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **13.06.2017  FR 1770622**

(43) Date de publication de la demande:
**22.04.2020   Bulletin 2020/17**

(73) Titulaires:
• **GAL S.L. Ltd**
  **4631108 Herzeliya (IL)**
• **Softbox Madeira Unipessoal, Lda**
  **Funchal (PT)**

(72) Inventeur: **Seznec-Serpaggi, Francis**
  **20115 Piana (FR)**

(74) Mandataire: **Ipside**
  **6, Impasse Michel Labrousse**
  **31100 Toulouse (FR)**

(56) Documents cités:
**EP-A2- 2 416 201       WO-A1-2007/030098**
**US-A1- 2012 327 247**

**Description**

La présente invention concerne un viseur destiné à être utilisé de jour et nuit. La présente invention se rapporte également à une arme comportant un tel viseur.

Dans le domaine militaire, le combat urbain est un type de combat spécifique. En particulier, en combat urbain, un militaire souhaite pouvoir simultanément tirer et se mouvoir. Pour tirer, le militaire a besoin de percevoir son environnement et de pouvoir rester à couvert. De plus, il convient que l'arme qu'utilise le militaire soit de faible encombrement et poids réduit.

Pour cela, il est connu d'utiliser des viseurs dit viseurs « point rouge ». De tels viseurs sont des systèmes optiques à vision directe projetant dans le champ de vision de l'utilisateur un point rouge matérialisant le point visé. La visée s'effectue à l'aide des deux yeux ouverts et permet d'acquérir une cible rapidement de jour.

Toutefois, de tels viseurs sont utilisables uniquement de jour parce que la vitesse d'acquisition n'est pas suffisamment rapide en utilisation de nuit.

Le document US2012/327247 A1 décrit un viseur comportant un imageur thermique, un écran, un capteur de lumière ambiante, et un contrôleur pour contrôler la luminosité de l'écran en fonction de l'éclairement mesuré afin d'améliorer le confort de l'utilisateur.

Le document EP2416201 A2 porte sur un dispositif de visée à module d'affichage tête haute (*Head Up Display*). Il peut comporter un obturateur pour passer d'un mode de fonctionnement en vision directe à un mode de fonctionnement en vision indirecte.

Il existe donc un besoin pour un viseur permettant un emploi de jour comme de nuit, en augmentant notamment la vitesse d'acquisition d'une cible.

Pour cela, l'invention a pour objet un viseur selon la revendication 1.

Suivant des modes de réalisation particuliers, le viseur comprend une ou plusieurs des caractéristiques suivantes, prise(s) isolément ou suivant toutes les combinaisons techniquement possibles :

- l'écran présente une diagonale dont la dimension est comprise entre 4 centimètres et 6 centimètres.
- le contrôleur est propre à faire afficher à l'écran un réticule de visée et est adapté pour contrôler le contraste entre le réticule de visée et l'écran en fonction de l'éclairement mesuré.
- la caméra présente un grossissement compris entre 0,95 et 1,05.
- le viseur comportant un bouton de contrôle déterminant le mode de fonctionnement de la caméra, un premier mode de fonctionnement dans lequel le grossissement de la caméra est compris entre 0,95 et 1,05 et un deuxième mode de fonctionnement dans lequel le grossissement de la caméra est compris entre 1,95 et 2,05.
- la caméra comporte un capteur d'image, le capteur de mesure étant le capteur d'image.
- l'écran est orientable entre au moins deux positions distinctes.
- le viseur comporte une vision optique directe, le basculement entre la vision par écran et la vision optique directe étant commandé par le contrôleur en fonction de l'éclairement mesuré.

La présente description décrit également une arme à feu équipée d'un viseur tel que précédemment décrit.

Suivant un mode de réalisation particulier, l'arme à feu comporte un appui pour la tête de l'utilisateur, l'appui étant agencé pour que le distance entre la tête de l'opérateur et l'écran soit comprise entre 8 centimètres et 15 centimètres lorsque la tête de l'utilisateur est appuyée sur l'appui.

D'autres caractéristiques et avantages de l'invention apparaîtront à la lecture de la description qui suit, de modes de réalisation de l'invention, donnée à titre d'exemple uniquement et en référence aux dessins qui sont :

- figure 1, une vue schématique d'un exemple d'arme à feu comportant un viseur,
- figure 2, une représentation schématique du viseur de la figure 1,
- figure 3, un schéma illustrant un premier exemple de configuration d'utilisation du viseur de la figure 1,
- figure 4, un schéma illustrant un deuxième exemple de configuration d'utilisation du viseur de la figure 1, et
- figure 5, une représentation schématique d'un autre exemple de viseur.

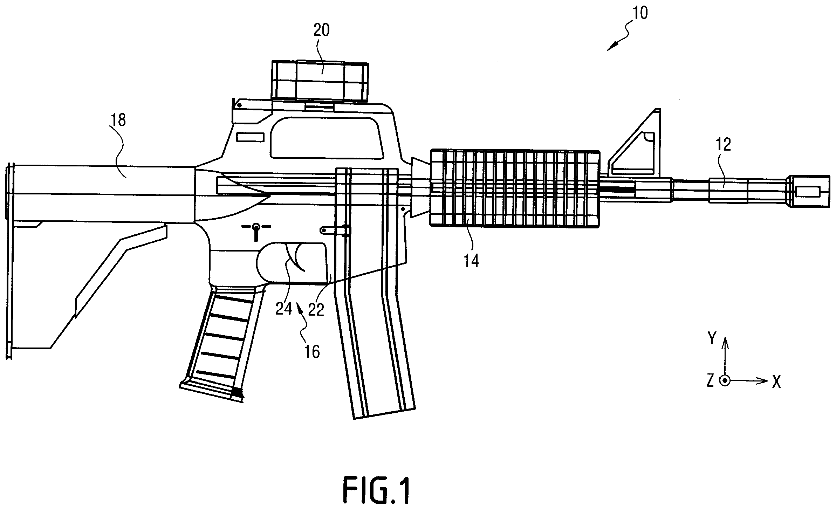

Une arme à feu 10 est représentée sur la figure 1.

L'arme à feu 10 est une arme qui sert à viser et à tirer sur une cible dans la ligne de visée d'un utilisateur.

L'arme à feu 10 est adaptée pour le combat urbain.

L'arme à feu 10 est portative.

Selon l'exemple décrit, l'arme à feu 10 est un fusil d'assaut.

En variante, l'arme à feu 10 est un fusil de chasse, une carabine, un revolver, une mitrailleuse aussi désignée sous le terme « machine gun » ou une arme à létalité réduite tel qu'un lanceur de balle de défense.

L'arme à feu 10 comporte notamment un canon 12, une crosse 14, un dispositif de mise à feu 16, un appui 18 pour la tête de l'utilisateur et un viseur 20.

L'arme à feu 10 comporte également d'autres éléments qui ne sont pas décrits plus précisément dans la suite comme un chargeur ou qui ne sont pas représentés comme une goupille, un manchon cache-flammes ou un levier d'armement.

Le canon 12 est un cylindre à base circulaire présentant un diamètre adapté pour permettre le passage de munitions de petit calibre.

Le canon 12 s'étend le long d'une direction principale. La direction principale est symbolisée par un axe X sur la figure 1. La direction principale est donc notée « direction principale X » dans la suite.

Il est également défini une première direction transversale, la première direction transversale étant perpendiculaire à la direction principale. La première direction transversale est symbolisée par un axe Y sur la figure 1. La première direction transversale est donc notée « première direction transversale Y » dans la suite.

Il est aussi défini une deuxième direction transversale, la deuxième direction transversale étant perpendiculaire à la direction principale X et à la première direction transversale Y. La deuxième direction transversale est symbolisée par un axe Z sur la figure 1. La deuxième direction transversale est donc notée « deuxième direction transversale Z » dans la suite.

La crosse 14 est propre à soutenir le canon 12 et à être tenue sur l'épaule de l'utilisateur.

Le dispositif de mise à feu 16 est propre à permettre l'envoi de munitions.

Selon l'exemple représenté, le dispositif de mise à feu 16 comporte un pontet 22 et un déclencheur 24.

Dans d'autres exemples, le dispositif de mise à feu 16 comporte également une sécurité.

L'appui 18 pour la tête de l'utilisateur correspond au talon de la crosse 14. L'appui 18 est propre à permettre un positionnement de la tête de l'utilisateur rapide et toujours au même endroit.

Le viseur 20 permet à l'utilisateur de viser une cible.

Le viseur 20 est également désigné par l'expression « dispositif de visée ».

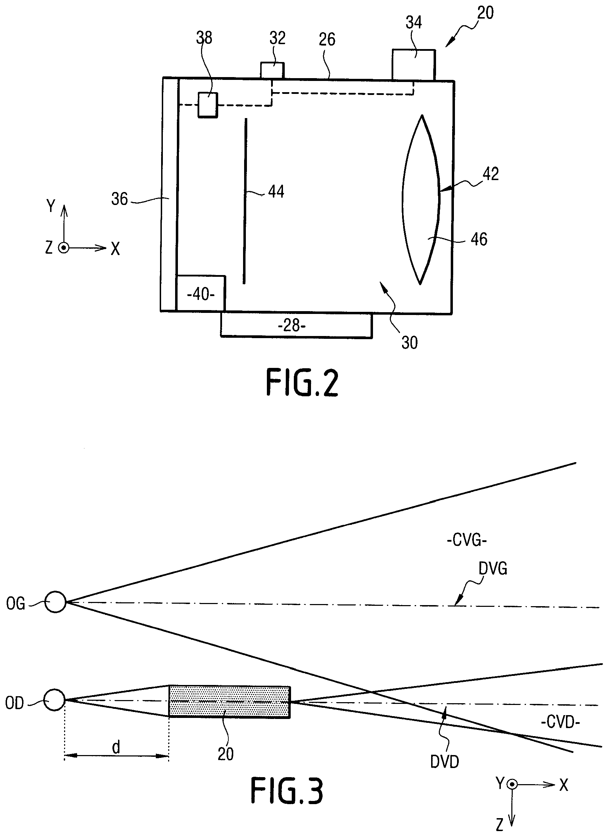

Le viseur 20 est visible plus en détail à la figure 2.

Le viseur 20 est destiné à être utilisé de jour et de nuit.

Le viseur 20 est propre à fonctionner à une température de fonctionnement et à être stocké à une température de stockage.

Cela signifie que chaque composant du viseur 20 est propre à fonctionner à la température de fonctionnement et à être stocké à la température de stockage.

Selon l'exemple décrit, la température de fonctionnement est comprise entre -10° et 40°. Par l'expression « comprise », il est entendu une acceptation large. Autrement dit, une grandeur est comprise entre une première valeur et une deuxième valeur signifie que la grandeur est supérieure ou égale à la première valeur et que la grandeur est inférieure ou égale à la deuxième valeur.

Dans le cas décrit, la température de stockage est comprise entre -50° et 60°.

Le viseur 20 présente un poids strictement inférieur à 500 grammes.

Le viseur 20 comporte une coque de protection 26 destinée à protéger l'ensemble des composants du viseur 20.

Par exemple, le coque de protection 26 se présente sous forme d'une paroi dans un premier matériau.

Le premier matériau est, par exemple, du plastique, de l'aluminium ou un matériau composite.

La coque de protection 26 présente une dimension le long de la direction principale X appelée longueur dans la suite de la description.

La longueur de la coque de protection 26 est comprise entre 50 millimètres (mm) et 300 mm.

Selon l'exemple présenté, la longueur est égale à 150 mm.

La coque de protection 26 présente également une dimension le long de la première direction transversale Y appelée hauteur dans la suite de la description.

La hauteur est comprise entre 50 mm et 70 mm.

Selon l'exemple présenté, la hauteur est égale à 70 mm.

La coque de protection 26 présente aussi une dimension le long de la deuxième direction transversale Z appelée profondeur dans la suite de la description.

La profondeur est comprise entre 30 mm et 50 mm.

Selon l'exemple présenté, la profondeur est égale à 50 mm.

La coque de protection 26 comporte, dans le cas présent, une interface de fixation 28.

L'interface de fixation 28 est une interface de fixation du viseur 20 à l'arme à feu 10.

Par exemple, l'interface de fixation 28 est une interface Picatiny.

En variante, l'interface de fixation 28 est un ensemble de vis propres à coopérer avec des orifices correspondants dans la crosse 14.

Le viseur 20 comporte une caméra 30, un bouton de contrôle 32, un capteur 34, un écran 36, un contrôleur 38 et une alimentation 40.

La caméra 30 est propre à acquérir une partie de l'environnement pour viser une cible.

La caméra 30 comporte un système optique 42 et un capteur d'image 44.

Le système optique 42 sert à capter une partie de l'environnement du viseur 20 et à envoyer l'image captée sur le capteur d'image 44.

Le système optique 42 présente un grand champ d'observation. Un champ d'observation est qualifié de « grand » lorsque le champ est supérieur ou égal à 40%.

Selon l'exemple présenté, le champ procuré par le système optique 42 est égal à 50°. Le champ indiqué dans ce contexte est le champ total du système optique 42.

Le système optique 42 comporte une unique lentille.

Selon l'exemple présenté, le système optique 42 comporte une lentille servant d'oculaire 46.

En variante, le système optique 42 est plus complexe.

Par exemple, le système optique 42 comporte deux lentilles ou plus de deux lentilles.

Il est également envisageable d'utiliser des lentilles dont la distance focale est variable, notamment à l'aide de bagues mécaniques.

Le système optique 42 est pourvu d'une loupe numérique activable par l'utilisateur.

Par l'expression « loupe numérique », il est entendu un agrandissement de l'image affichée sur l'écran 36 sans modification de l'observation de l'image par le capteur d'image 44.

Deux positions ou, plus exactement deux modes de fonctionnement, existent donc pour le système optique 42, une première position dans laquelle la loupe numérique est désactivée et une deuxième position dans laquelle la loupe numérique est activée.

Dans la première position qui est représentée sur la figure 2, le grossissement G du système optique 42, c'est-à-dire le grossissement de la caméra 30, présente une première valeur G1.

Dans la deuxième position, le grossissement G du système optique 42, c'est-à-dire le grossissement de la caméra 30, présente une deuxième valeur G2.

Le rapport entre la deuxième valeur G2 et la première valeur G1 est strictement supérieur à 1, de sorte que la deuxième position correspond à une position de loupe.

Selon un mode de réalisation, le rapport entre la deuxième valeur G2 et la première valeur G1 est strictement supérieur à 1,5, de préférence strictement supérieure à 1,8.

La première valeur G1 est, par exemple, comprise entre 0,95 et 1,05.

Dans le cas illustré, la première valeur G1 est égale à 1.

La deuxième valeur G2 est, par exemple, comprise entre 1,95 et 2,05.

Dans l'exemple présenté, la deuxième valeur G2 est égale à 2.

En variante, la deuxième valeur G2 est strictement supérieur à 2,5.

En outre, selon un mode de réalisation, la deuxième valeur G2 est choisie par l'utilisateur du viseur 20.

Ainsi, pour le cas de la figure 2, le rapport entre la deuxième valeur G2 et la première valeur G1 est égal à 2.

Le capteur d'image 44 est un capteur sensible à des radiations dans le domaine visible.

En supplément, le capteur d'image 44 est également sensible à des radiations dans le domaine infrarouge.

Le capteur d'image 44 est un ensemble de pixels. Par abus de langage, chaque pixel est appelé « photodétecteur » dans la suite de la description.

Par exemple, les photodétecteurs sont réalisés dans une technologie de type CMOS. Pour rappel, il est appelé CMOS une technologie de fabrication de composants électroniques et, par extension, les composants fabriqués selon cette technologie.

Selon un autre exemple, le capteur d'image 44 est un dispositif à charge découplée (aussi notée sous le sigle CCD).

Dans le cas présenté, la caméra 30 est propre à fonctionner dans la bande spectrale s'étendant entre 400 nanomètres (nm) et 1200 nm.

La sensibilité de la caméra 30 est comprise entre 50 $\mu$lux et 50 lux, ce qui définit sa dynamique.

Une telle dynamique en fait une caméra 30 nuit de niveau 4.

Une telle dynamique est obtenue par la mise en oeuvre d'un iris automatique et d'un contrôle automatique de gain.

L'iris permet de réduire la luminosité en cas d'éclairement trop intense.

Le contrôle automatique de gain permet de régler électroniquement le gain de chaque photodétecteur du capteur d'image 44 et ainsi d'optimiser le rendu image.

Le bouton de contrôle 32 permet de contrôler la loupe numérique.

Le bouton de contrôle 32 est actionnable manuellement par l'utilisateur.

Le capteur 34 est un capteur de mesure de l'éclairement de l'environnement du viseur 20.

Le capteur 34 présente une grande dynamique. Le capteur 34 est capable de mesurer des éclairements compris entre 10 $\mu$lux et 100 lux.

L'écran 36 est un écran d'affichage de la partie d'environnement.

L'écran 36 est un écran numérique.

Par exemple, l'écran 36 est un écran de type OLED (sigle de « Organic Ligth-Emitting Diode » signifiant en français « diode électroluminescente organique »).

En ce sens, l'écran 36 est un écran de visualisation indirecte de l'environnement. L'écran 36 présente une luminosité.

La luminosité est une propriété des couleurs s'appliquant à des sources primaires. Plus précisément, la luminosité évalue la perception de l'aspect lumineux de la couleur étudiée : plus la couleur est sombre, plus la luminosité est faible.

Une définition couramment utilisée pour la luminosité a été définie par la Commission Internationale de l'Eclairage (CIE) en 1976. Cette définition est celle qui est choisie pour la suite de la description.

Dans cette définition, la luminosité est notée L* et est calculée à partir de la luminance lumineuse de la lumière produite par une source primaire (l'écran 36 en l'occurrence) exprimée en candelas par mètre carré relativement à la luminance lumineuse du blanc pris comme référence.

La formule de calcul est alors donnée par le système suivant :

$$L^* = \begin{cases} 116 * \left(\dfrac{LL}{LL_B}\right)^{\frac{1}{3}} - 16 \ si \ \dfrac{LL}{LL_B} > \left(\dfrac{6}{29}\right)^3 \\ 903{,}3 * \dfrac{LL}{LL_B} \ si \ \dfrac{LL}{LL_B} \leq \left(\dfrac{6}{29}\right)^3 \end{cases}$$

Où :

- LL désigne la luminance lumineuse de la lumière produite par l'écran 36, et
- $LL_B$ désigne la luminance lumineuse du blanc sur l'écran 36 pris comme référence.

La caméra 30 et l'écran 36 sont configurés pour qu'un utilisateur du viseur 20 vise une cible avec les deux yeux ouverts.

Cela implique notamment que l'image affichée à l'écran 36 est une image à « l'infini » ou collimatée.

En outre, le système optique 42 est propre à fonctionner en hyperfocale. Ceci signifie qu'aucun réglage de focalisation n'est effectué entre une distance minimale (quelques mètres) jusqu'à l'infini.

Pour une cible visée à 100 mètres ou plus, le système optique 42 est donc tel que l'écran 36 affiche une image à « l'infini » permettant à l'utilisateur de viser avec deux yeux ouverts.

En outre, la caméra 30 et l'écran 36 sont agencés pour limiter au maximum l'observation de la coque de protection 26 du viseur 20 par l'œil qui regarde en vision directe la scène à observer. Cela facilite la superposition des images vues par les deux yeux.

Selon un mode de réalisation particulier, l'écran 36 présente une taille très voisine de la coque de protection 26.

Dans l'exemple représenté, l'écran 36 d'affichage est perpendiculaire à la direction principale X. L'écran 36 présente donc une hauteur et une profondeur.

Le rapport entre la hauteur et la profondeur est compris entre 1 et 2.

L'écran 36 présente également une diagonale.

La dimension de la diagonale est comprise entre 4 cm et 6 cm.

Selon l'exemple proposé, la dimension de la diagonale est égale à 5 centimètres.

L'écran 36 présente également une bonne qualité de restitution de l'image acquise par la caméra 30. Cela signifie que la dynamique de l'écran 36 suit la luminosité de la scène observée par l'œil nu. En effet, pour faciliter la fusion d'image, il convient que la luminosité des scènes soit très voisine. Le cerveau a toujours tendance à donner la priorité à la scène la plus lumineuse.

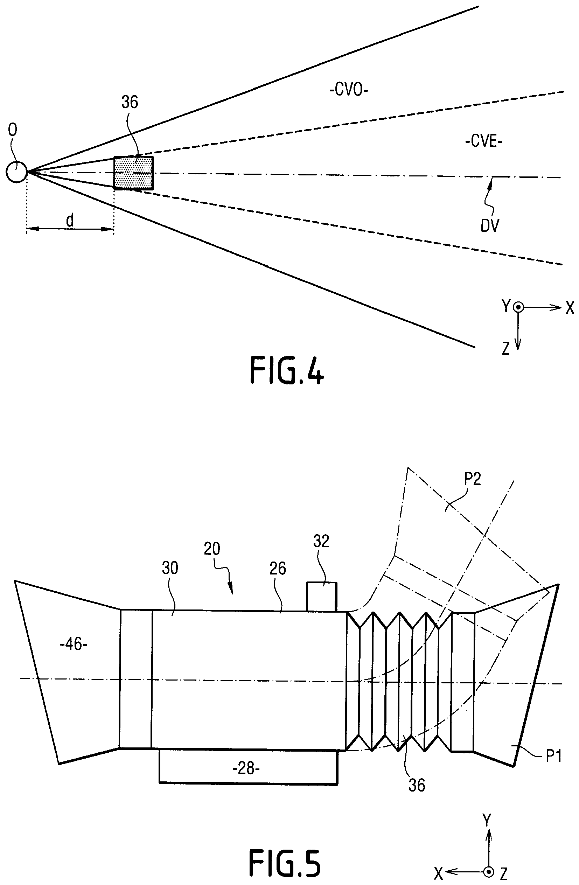

L'appui 18 et l'écran 36 sont agencés dans l'espace pour que la distance entre la tête de l'utilisateur et l'écran 36 soit comprise entre 8 et 15 centimètres lorsque la tête de l'utilisateur est appuyée sur l'appui 18. Dans un tel contexte, la distance entre la tête de l'utilisateur et l'écran 36 est la distance entre l'œil visant l'écran 36 et le centre de l'écran 36. Cette distance est notée d sur les figures 3 et 4.

Le contrôleur 38 est adapté pour contrôler la luminosité de l'écran 36 en fonction de l'éclairement mesuré par le capteur 34 de mesure de l'éclairement.

Un tel contrôle est indiqué par des traits pointillés sur la figure 2.

Le contrôle est tel que la luminosité de l'écran 36 paraisse identique à la luminosité de la scène observée à l'œil nu pour l'utilisateur. Une manière de réaliser un tel contrôle est que les deux luminosités soient identiques.

L'alimentation 40 du viseur 20 est une alimentation électrique.

Selon un exemple, l'alimentation 40 est une pile.

La pile est, dans un cas particulier, une pile AA.

Selon un autre exemple, l'alimentation 40 est un accumulateur.

Selon encore un autre exemple, l'alimentation 40 est une batterie.

Selon une variante, l'alimentation 40 est un ensemble comportant des éléments, les éléments étant choisis parmi une pile, un accumulateur et une batterie.

Le fonctionnement de l'arme à feu 10, et en particulier du viseur 20, est maintenant décrit en référence aux figures 3 et 4 qui illustrent deux configurations particulières d'utilisation du viseur 20.

Comme remarque préliminaire, il est à noter que le viseur 20 est utilisable pour différentes applications selon la mission de l'utilisateur. Ainsi, selon les cas, le viseur 20 sert d'équipement pour faciliter l'observation, la visée ou le tir d'une ou plusieurs cibles prédéfinies.

Dans la première configuration illustrée par la figure 3, l'utilisateur voit la scène avec un oeil en face de l'écran 36 et un oeil regardant la scène en direct. Dans l'exemple représenté, c'est l'œil droit OD qui regarde l'écran 36 et l'œil gauche OG qui regarde la scène directement.

L'oeil gauche OG observe ainsi une scène à l'infini sans moyen de visée avec un grossissement naturel. Ce grossissement naturel est usuellement égal à 1. Le champ de vision de l'oeil gauche CVG est délimité par deux traits pleins sur la figure 3. Il en outre indiqué la direction de visée de l'œil gauche OG notée DVG.

L'oeil droit OD observe l'écran 36 qui affiche l'image d'une scène à « l'infini » avec un grossissement égal à 1 qui est identique au grossissement naturel. Le champ de vision de l'œil droit CVD est délimité par deux traits pleins sur la figure 3. Il en outre indiqué la direction de visée de l'œil droit OD notée DVD. La direction de visée DVD de l'œil droit OD est parallèle à la direction DVG de visée de l'œil gauche OG.

Ensuite, le cerveau humain de l'utilisateur fait la fusion entre l'observation directe d'une scène par l'œil gauche OG, et l'observation à travers l'écran 36 par l'œil droit OD.

Dans cette première configuration, il est avantageusement utilisé le fait que l'image affichée sur l'écran 36 est une image de la scène à « l'infini » avec un grossissement 1 avec une bonne qualité optique.

Dans une telle configuration, la présence d'un oculaire n'est pas nécessaire. Toutefois, cela implique un travail dissymétrique sur chaque oeil limitant l'utilisation d'une telle configuration à cause du risque de maux de tête provoqués chez l'utilisateur de l'arme à feu 10.

Dans la deuxième configuration illustrée par la figure 4, l'utilisateur voit la scène avec son oeil O pour la partie du champ de vision qui n'est pas occulté par l'écran 36 et voit l'autre partie de la scène en regardant l'écran 36. La partie du champ de vision qui n'est pas occulté par l'écran 36 est notée CVO (champ visuel vu directement par l'œil) et la partie de la scène en regardant l'écran 36 est notée CVE (champ visuel vu directement par l'écran 36). La direction de visée étant commune aux deux configurations, la direction de visée est notée DV.

L'autre partie de la scène étant à « l'infini », le cerveau de l'utilisateur effectue la fusion des deux images.

La deuxième configuration fonctionne encore si la scène affichée à l'écran 36 l'est avec un grossissement supérieur à 1, c'est-à-dire avec un effet de loupe.

Lorsque la distance du viseur 20 est bien ajustée (distance oeil viseur 20) permettant ainsi à chaque oeil de transmettre une image cohérente l'une de l'autre en taille d'image, en luminosité et en couleur le cerveau fusionne (superpose les deux images) pour donner l'impression d'une seule image

Le viseur 20 est donc un viseur jour/nuit pour combat urbain dont les principales caractéristiques sont d'être un système optronique de visée courte distance. Par l'expression « courte distance » dans ce contexte, il est entendu une distance de visée inférieure à 200 mètres.

En outre, le viseur 20 est à vision indirecte puisque l'écran 36 est utilisé.

Le viseur 20 est propre à fonctionner sans oculaire.

Le viseur 20 permet à l'utilisateur de l'arme à feu 10 de disposer de capacités simultanées de tir et de mobilité. Ces capacités sont accessibles à l'utilisateur de l'arme de jour comme de nuit.

Le viseur 20 octroie à l'utilisateur la possibilité de tirer avec les deux yeux ouverts.

Le viseur 20 permet également à l'utilisateur de percevoir l'environnement à courte distance.

L'emploi du viseur 20 permet à l'utilisateur de tirer en restant à couvert. Cet avantage est indépendant des conditions d'éclairement de sorte que l'utilisateur peut tirer en restant à couvert de jour comme de nuit.

Le viseur 20 permet à l'utilisateur de bénéficier d'une grande dynamique d'observation de l'environnement puisque le viseur 20 s'adapte à des conditions correspondant à des éclairements compris entre 10 $\mu$lux et 100 lux.

Selon les modes de réalisation, l'adaptation est mise en oeuvre automatiquement ou non.

Le viseur 20 offre à l'utilisateur une grande robustesse.

Le viseur 20 présente également un faible encombrement et un poids réduit, ce qui permet d'assurer une efficacité opérationnelle jusqu'à 400 mètres.

Le viseur 20 assure également à l'utilisateur une rapidité d'acquisition de la cible, ce qui peut permettre à l'utilisateur de se sauver dans certains cas. Notamment, l'opération d'ajustement du tir, c'est-à-dire mettre l'œil dans l'axe du viseur 20 est évitée. Cette opération étant délicate, pour les viseurs 20 selon l'état de la technique, la vitesse d'acquisition de la cible est beaucoup plus lente.

En outre, le viseur 20 peut être produit à un coût réduit.

Ainsi, le viseur 20 rend l'arme à feu 10 adaptée pour le combat urbain indépendamment des conditions d'éclairement. Il en résulte que l'arme à feu 10 est utilisable aussi bien de jour que de nuit.

Le viseur 20 est compatible avec des jumelles à vision nocturne.

D'autres modes de réalisation sont également possibles pour le viseur 20.

Un autre mode de réalisation de viseur 20 est présenté sur la figure 5.

Le viseur 20 selon la figure 2 et le viseur 20 selon la figure 5 étant similaires, seules les différences entre les deux viseurs 20 sont décrites dans ce qui suit. Les remarques valables pour les deux viseurs 20 ne sont pas répétées ici pour faciliter la lecture.

Dans l'exemple de la figure 5, le capteur 34 de mesure est le capteur d'image 44 de la caméra 30.

En outre, l'écran 36 est orientable entre au moins deux positions distinctes.

Par exemple, l'écran 36 est monté sur une liaison rotule de sorte que l'écran 36 est orientable suivant tous les axes possibles.

L'écran 36 est, en outre, muni d'un soufflet de protection.

Sur la figure 5, il est illustre une observation selon la direction principale X en trait plein (position P1) et une observation vers le bas pour un tir à la hanche en traits pointillés (position P2).

Il est à noter que les positions latérales décalées vers la droite ou la gauche sont aussi possibles pour une observation latérale en position tireur camouflé derrière un obstacle, tel un mur.

Dans un tel mode de réalisation, les avantages mentionnés pour le viseur 20 selon le mode de réalisation de la figure 2 sont également valables.

En outre, le viseur 20 de la figure 5 est plus léger, et le viseur 20 rend possibles d'autres configurations de tir comme le tir à la hanche par le haut ou latéralement pour le tir camouflé. Ces configurations présentent des avantages opérationnels.

D'autres variantes sont également envisageables.

Selon une autre variante, le capteur 34 de mesure comporte deux senseurs distincts, un premier senseur destiné aux conditions d'éclairement de jour et un deuxième senseur destiné aux conditions d'éclairement de nuit.

Une telle variante permet de gagner en précision au détriment du poids du viseur 20.

Selon une variante, la fusion entre les deux images permet également de transmettre des informations à l'utilisateur via l'écran 36.

Lorsque la distance du viseur 20 est bien ajustée (permettant ainsi à chaque oeil de transmettre une image cohérente l'une de l'autre en taille d'image, en luminosité et en couleur le cerveau fusionne (superpose les deux images) pour donner l'impression d'une seule image sur laquelle sont incrustées les informations de l'écran 36.

Dans un mode de réalisation spécifique, les informations sont des informations de fonctionnement sur l'arme à feu 10.

Les informations sont, par exemple, des informations de visée.

En variante, les informations sont des informations de fonctionnement du viseur 20, telles que le niveau de charge de la batterie.

Selon un mode de réalisation alternatif ou complémentaire, les informations de l'écran 36 sont un réticule de visée.

Par exemple, le réticule de visée est une croix.

Selon un autre exemple, le réticule de visée est une pluralité de points s'illuminant lorsque le contrôleur 38 estime que la mise au point est effectuée correctement. Pour cela, il est utilisé une évaluation automatique de la focale du système optique 42.

Dans une telle variante, l'utilisateur de l'arme à feu 10 a rapidement accès aux informations que l'utilisateur a besoin pour prendre sa décision. Une telle rapidité augmente la capacité de réaction de l'utilisateur à une menace.

De manière avantageuse, le réticule de visée est usuellement affiché en noir, ce qui crée un contraste avec l'écran 36.

Par définition, pour la suite, le contraste réticule/écran 36 est défini comme la différence entre la luminance du blanc de référence de l'écran 36 et la luminance de la couleur choisie pour afficher le réticule de visée à l'écran 36.

Le contrôleur 38 est également propre à contrôler le contraste réticule/écran 36 en fonction de l'éclairement mesuré par le capteur 34.

En variante, le contrôleur 38 utilise une base de données comportant un ensemble de réticules, chaque réticule étant associé à un ensemble de conditions d'utilisation. Le contrôleur 38 est alors propre à déterminer pour une situation donnée les conditions et à sélectionner le réticule adapté dans la base de données.

Selon une variante, le grossissement de la caméra 30 est réglable pour correspondre exactement au grossissement naturel de l'utilisateur de l'arme à feu 10.

Selon une autre variante, le viseur 20 comporte également une source de lumière agencée pour utiliser le système optique 42 de la caméra 30.

Par exemple, la source de lumière est une diode électroluminescente propre à émettre dans une gamme de longueurs d'onde non visibles mais détectables par la caméra 30.

Typiquement, la gamme de longueurs d'onde est incluse dans le domaine infrarouge.

Par exemple, selon les types d'observation, les gammes de longueurs d'onde sont l'une ou plusieurs des suivantes : une gamme de longueurs d'onde comprise entre 400 nm et 600 nm, une gamme de longueurs d'onde comprise entre 500 nm et 900 nm et une gamme comprise entre 400 nm et 1200 nm, une gamme de longueurs d'onde comprise entre 2 $\mu$m et 5 $\mu$m (aussi appelée bande 2) et une gamme de longueurs d'onde comprise entre 8 $\mu$m et 12 $\mu$m (aussi appelée bande 3).

En variante, la source de lumière est un laser.

La source de lumière permet la désignation de cible pour un tir instinctif, ou l'illumination d'une scène en cas d'obscurité totale (zone confinée, bâtiment...).

Selon un cas particulier, l'intensité de la source de lumière est réglable.

Selon un autre cas particulier, le viseur 20 est pourvu d'un diffuseur dont la position est réglable, le diffuseur étant sur le trajet de la source de lumière dans le cas où il est souhaité de désigner la cible.

Dans cette variante, il est avantageusement utilisé le fait que le viseur 20 présente une bande passante plus étendue que tous les systèmes de vision nocturne classiquement déployés sur le champ de bataille pour pourvoir le viseur 20 avec une fonction supplémentaire de désignation de cible ou d'illumination d'un environnement.

Selon une autre variante, l'écran 36 comporte plusieurs modes de fonctionnement.

Par exemple, selon un cas particulier, l'écran 36 comporte une mode dit « vision de nuit par jumelles » dans lequel l'écran 36 affiche une luminosité rémanente pour permettre l'emploi de jumelles à vision de nuit. La luminosité rémanente est la luminosité qu'observerait à l'œil nu un utilisateur doté de jumelles de vision nocturne.

Dans un cas particulier, le passage dans le mode dit « vision de nuit » est réalisé à l'aide d'un ajout d'un filtre atténuateur.

Par exemple, la position du filtre d'atténuateur est commandable par le bouton de contrôle 32.

Un tel mode de fonctionnement permet l'emploi de l'arme à feu 10 avec des jumelles à vision de nuit.

L'utilisation d'un mode dit « vision de nuit par jumelles » adaptant la luminosité de l'écran 36 à la sensibilité des jumelles, permet ainsi la superposition de la vision par jumelle de la scène observée et de l'image affichée par l'écran 36. Les expérimentations menées par la demanderesse ont montré que l'on pouvait utiliser le viseur 20 avec une efficacité de plus de 100 mètres contre 25 mètres pour un viseur 20 de l'état de la technique. En outre, pour l'utilisateur, le confort d'acquisition est bien supérieur avec le viseur 20 tel que décrit.

Selon un autre cas particulier, le viseur 20 comporte un mode « vision directe » et un mode « vision par écran ».

Pour cela, le viseur 20 est muni d'une vision optique directe.

La vision optique directe donnerait accès à la même scène que l'écran 36.

Le basculement entre la vision optique directe et la vision via l'écran 36 est contrôlé par un mécanisme dédié.

Le mécanisme comporte par exemple des prismes ou des lames réfléchissantes.

Dans un exemple particulier, le basculement du mécanisme est commandé de l'extérieur par l'utilisateur.

Selon un autre exemple particulier, le basculement du mécanisme est contrôlé par le contrôleur 38 et donc par les conditions d'éclairage ambiant.

L'avantage d'un tel viseur 20 est de bénéficier du meilleur des deux visions (directe et indirecte) et d'augmenter de manière notable l'autonomie de fonctionnement.

En variante, le système optique 42 comporte une loupe mécanique et non numérique.

Par exemple, le système optique 42 est pourvu d'une lentille d'agrandissement escamotable et présentant au moins deux positions, chaque position correspondant à un grossissement différent du système.

Par exemple, dans la première position, la lentille d'agrandissement permet d'obtenir un premier grossissement G1 dans la première position et la lentille d'agrandissement permet d'obtenir un deuxième grossissement G2 dans la deuxième position.

Les modes de réalisation précédemment décrits ne sont pas limitatifs, car l'invention est définie par les revendications annexées.

**Revendications**

1. Viseur (20) destiné à être utilisé de jour et de nuit, le viseur (20) comportant :

    - une interface de fixation (28) à une arme à feu (10),
    - une caméra (30) acquérant une partie de l'environnement pour viser une cible,
    - un capteur (34) de mesure de l'éclairement de l'environnement du viseur (20),
    - un écran (36) d'affichage de la partie d'environnement acquise par la caméra (30), l'écran (36) présentant une luminosité, et
    - un contrôleur (38) adapté pour contrôler la luminosité de l'écran (36) en fonction de l'éclairement mesuré,
    **caractérisé en ce que** la caméra (30) et l'écran

(36) sont configurés pour qu'un utilisateur du viseur (20) vise une cible avec les deux yeux ouverts,
et **en ce que** ledit contrôleur (38) est adapté pour que la luminosité de l'écran (36) soit identique à la luminosité, mesurée par le capteur de mesure (34), de la partie de l'environnement acquise.

2. Viseur selon la revendication 1, dans lequel l'écran (36) présente une diagonale dont la dimension est comprise entre 4 centimètres et 6 centimètres.

3. Viseur selon la revendication 1 ou 2, dans lequel le contrôleur (38) est propre à faire afficher à l'écran (36) un réticule de visée et est adapté pour contrôler le contraste entre le réticule de visée et l'écran (36) en fonction de l'éclairement mesuré.

4. Viseur selon l'une quelconque des revendications 1 à 3, dans lequel la caméra (30) présente un grossissement compris entre 0,95 et 1,05.

5. Viseur selon l'une quelconque des revendications 1 à 3, dans lequel le viseur (20) comportant un bouton de contrôle (32) déterminant le mode de fonctionnement de la caméra (30), un premier mode de fonctionnement dans lequel le grossissement de la caméra (30) est compris entre 0,95 et 1,05 et un deuxième mode de fonctionnement dans lequel le grossissement de la caméra (30) est compris entre 1,95 et 2,05.

6. Viseur selon l'une quelconque des revendications 1 à 5, dans lequel la caméra (30) comporte un capteur d'image (44), le capteur (34) de mesure étant le capteur d'image (44).

7. Viseur selon l'une quelconque des revendications 1 à 6, dans lequel l'écran (36) est orientable entre au moins deux positions distinctes (P1, P2).

8. Viseur selon l'une quelconque des revendications 1 à 7, dans lequel le viseur (20) comporte une vision optique directe, le basculement entre la vision par écran (36) et la vision optique directe étant commandé par le contrôleur (38) en fonction de l'éclairement mesuré.

9. Arme à feu (10) équipée d'un viseur (20) selon l'une quelconque des revendications 1 à 8.

10. Arme à feu selon la revendication 9, dans lequel l'arme à feu (10) comporte un appui (18) pour la tête de l'utilisateur, l'appui (18) étant agencé pour que le distance entre la tête de l'opérateur et l'écran (36) soit comprise entre 8 centimètres et 15 centimètres lorsque la tête de l'utilisateur est appuyée sur l'appui (18).

**Patentansprüche**

**1.** Visier (20), das dazu bestimmt ist, am Tag und in der Nacht verwendet zu werden, wobei das Visier (20) Folgendes beinhaltet:

- eine Befestigungsschnittstelle (28) an einer Feuerwaffe (10),
- eine Kamera (30), die einen Teil der Umgebung erfasst, um ein Ziel anzuvisieren,
- einen Sensor (34) zum Messen der Ausleuchtung der Umgebung des Visiers (20),
- einen Bildschirm (36) zum Anzeigen des Teils der Umgebung, der von der Kamera (30) erfasst wird, wobei der Bildschirm (36) eine Helligkeit aufweist, und
- eine Steuerung (38), die angepasst ist, um die Helligkeit des Bildschirms (36) in Abhängigkeit von der gemessenen Ausleuchtung zu steuern, **dadurch gekennzeichnet, dass** die Kamera (30) und der Bildschirm (36) konfiguriert sind, damit ein Nutzer des Visiers (20) ein Ziel mit den beiden offenen Augen anvisiert, und dadurch, dass die Steuerung (38) angepasst ist, damit die Helligkeit des Bildschirms (36) gleich der von dem Messsensor (34) gemessenen Helligkeit des erfassten Teils der Umgebung ist.

**2.** Visier nach Anspruch 1, wobei der Bildschirm (36) eine Diagonale aufweist, deren Abmessung zwischen 4 Zentimetern und 6 Zentimetern liegt.

**3.** Visier nach Anspruch 1 oder 2, wobei die Steuerung (38) geeignet ist, um am Bildschirm (36) ein Fadenkreuz anzeigen zu lassen, und imstande ist, um den Kontrast zwischen dem Fadenkreuz und dem Bildschirm (36) in Abhängigkeit von der gemessenen Ausleuchtung zu steuern.

**4.** Visier nach einem der Ansprüche 1 bis 3, wobei die Kamera (30) einer Vergrößerung aufweist, die zwischen 0,95 und 1,05 liegt.

**5.** Visier nach einem der Ansprüche 1 bis 3, wobei das Visier (20) einen Steuerknopf (32) beinhaltet, der die Betriebsart der Kamera (30) bestimmt, eine erste Betriebsart, bei der die Vergrößerung der Kamera (30) zwischen 0,95 und 1,05 liegt, und eine zweite Betriebsart, bei der die Vergrößerung der Kamera (30) zwischen 1,95 und 2,05 liegt.

**6.** Visier nach einem der Ansprüche 1 bis 5, wobei die Kamera (30) einen Bildsensor (44) beinhaltet, wobei der Messsensor (34) der Bildsensor (44) ist.

**7.** Visier nach einem der Ansprüche 1 bis 6, wobei der Bildschirm (36) zwischen mindestens zwei unterschiedlichen Positionen (P1, P2) ausrichtbar ist.

**8.** Visier nach einem der Ansprüche 1 bis 7, wobei das Visier (20) eine direkte optische Sicht beinhaltet, wobei die Umschaltung zwischen der Sicht über den Bildschirm (36) und der direkten optischen Sicht durch die Steuerung (38) in Abhängigkeit von der gemessenen Ausleuchtung angesteuert wird.

**9.** Feuerwaffe (10), die mit einem Visier (20) nach einem der Ansprüche 1 bis 8 ausgerüstet ist.

**10.** Feuerwaffe nach Anspruch 9, wobei die Feuerwaffe (10) eine Stütze (18) für den Kopf des Nutzers beinhaltet, wobei die Stütze (18) angeordnet ist, damit der Abstand zwischen dem Kopf des Bedieners und dem Bildschirm (36) zwischen 8 Zentimetern und 15 Zentimetern liegt, wenn der Kopf des Nutzers an der Stütze (18) anliegt.

**Claims**

**1.** Sight (20) intended to be used during the day and at night, the sight (20) including:

- an interface for fastening (28) to a firearm (10),
- a camera (30) acquiring a part of the environment to aim at a target,
- a sensor (34) for measuring the illuminance of the environment of the sight (20),
- a screen (36) for displaying the part of the environment acquired by the camera (30), the screen (36) having a luminosity, and
- a controller (38) adapted to control the luminosity of the screen (36) according to the illuminance measured, **characterised in that** the camera (30) and the screen (36) are configured for a user of the sight (20) to aim at a target with both eyes open, and **in that** said controller (38) is adapted for the luminosity of the screen (36) to be identical to the luminosity, measured by the measurement sensor (34), of the part of the environment acquired.

**2.** Sight according to claim 1, wherein the screen (36) has a diagonal, the dimension of which is between 4 centimetres and 6 centimetres.

**3.** Sight according to claim 1 or 2, wherein the controller (38) is suitable for making the screen (36) display a crosshair and is adapted to control the contrast between the crosshair and the screen (36) according to the illuminance measured.

4. Sight according to any one of claims 1 to 3, wherein the camera (30) has a magnification between 0.95 and 1.05.

5. Sight according to any one of claims 1 to 3, wherein the sight (20) includes a control button (32) determining the operating mode of the camera (30), a first operating mode in which the magnification of the camera (30) is between 0.95 and 1.05 and a second operating mode in which the magnification of the camera (30) is between 1.95 and 2.05.

6. Sight according to any one of claims 1 to 5, wherein the camera (30) includes an image sensor (44), the measurement sensor (34) being the image sensor (44).

7. Sight according to any one of claims 1 to 6, wherein the screen (36) can be oriented between at least two distinct positions (P1, P2).

8. Sight according to any one of claims 1 to 7, wherein the sight (20) includes a direct optical vision, the switch between the vision by screen (36) and the direct optical vision being controlled by the controller (38) according to the illuminance measured.

9. Firearm (10) equipped with a sight (20) according to any one of claims 1 to 8.

10. Firearm according to claim 9, wherein the firearm (10) includes a support (18) for the head of the user, the support (18) being arranged for the distance between the head of the operator and the screen (36) to be between 8 centimetres and 15 centimetres when the head of the user bears on the support (18).

FIG.1

EP 3 638 972 B1

FIG.2

FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012327247 A1
- EP 2416201 A2